Europäisches Patentamt

European Patent Office

Office européen des brevets

(19)

(11) Numéro de publication: **0 010 036**
**B1**

(12) **FASCICULE DE BREVET EUROPEEN**

(45) Date de publication du fascicule de brevet: **30.12.81**

(21) Numéro de dépôt: **79400682.5**

(22) Date de dépôt: **26.09.79**

(51) Int. Cl.³: **G 21 C 7/36, G 21 C 7/06, G 06 F 11/00**

(54) **Procédé de conduite d'un réacteur nucléaire refroidi à l'eau légère.**

(30) Priorité: **05.10.78 FR 7828526**

(43) Date de publication de la demande:
**16.04.80 Bulletin 80/8**

(45) Mention de la délivrance du brevet:
**30.12.81 Bulletin 81/52**

(84) Etats contractants désignés:
**BE DE GB IT NL SE**

(56) Documents cités:
**FR - A - 2 238 992**
**FR - A - 2 283 515**
**FR - A - 2 231 864**
**US - A - 3 791 922**
**US - A - 4 016 034**
**US - A - 4 066 497**

(73) Titulaire: **Framatome**
**Tour Fiat 1 place de la Coupole**
**F-92400 Courbevoie (FR)**

(72) Inventeur: **Francillon, Gérard**
**Résidence le France 14 Square Léon Blum**
**F-92800 Puteaux (FR)**
Inventeur: **Abenhaim, Georges**
**1 quai d'Austerlitz**
**F-75013 Paris (FR)**

(74) Mandataire: **Bouget, Lucien et al,**
**CREUSOT-LOIRE 15 rue Pasquier**
**F-75383 Paris Cedex 08 (FR)**

Courier Press, Leamington Spa, England.

Procédé de conduite d'un réacteur nucléaire refroidi à l'eau légère

L'invention concerne un procédé de conduite d'un réacteur nucléaire refroidi à l'eau légère par déplacement de barres de commande et modification de l'état chimique et/ou physique du réfrigérant.

Pour la conduite d'un réacteur nucléaire refroidi à l'eau légère, en particulier d'un réacteur nucléaire à eau sous pression, l'opérateur chargé de cette tâche dispose, d'une part d'une possibilité d'action sur les barres de commande insérées entre les éléments combustibles plus ou moins profondément et constituées de matériau absorbant les neutrons et d'autre part d'une possibilité d'action sur l'état chimique ou physique du réfrigérant. En particulier, l'opérateur peut modifier la concentration en bore soluble du réfrigérant constitué par de l'eau pour modifier son efficacité comme modérateur.

Selon un procédé plus récent, l'opérateur peut également faire va rier la température du réfrigérant dans la branche froide, c'est-à-dire avant son retour dans le réacteur afin d'absorber une plus grande quantité de chaleur et ainsi fournir une énergie plus importante au cas d'une demande accrue de puissance au niveau de la turbine.

Pour effectuer ces déplacements de barres ou ces modifications de l'état du réfrigérant, l'opérateur ne dispose d'aucun point de repère lui permettant de connaître précisément l'effet des actions qu'il peut avoir sur les barres ou l'état du réfrigérant avant d'effectuer les opérations.

Les seules limitations apportées aux actions qu'il peut entreprendre sont fournies par les dispositifs de sécurité du réacteur qui s'enclenchent lorsque certaines limites ont été franchies et ce déclenchement des sécurités est préjudiciable à une marche continue du réacteur qui peut être arrêté en cas de fausse manoeuvre de l'opérateur ou dans le cas où un programme de puissance trop exigeant a été demandé.

Il n'était pas possible jusqu'ici de prévoir les conséquences des actions de l'opérateur car on ne disposait pas sur le site de moyens de calculs suffisants pour évaluer l'évolution des paramètres du réacteur, en ce qui concerne par exemple le flux, la puissance et l'état du combustible, à la suite d'une action de l'opérateur.

En effet, les modèles mathématiques utilisés jusqu'ici pour calculer l'évolution des différents paramètres du réacteur au cours du temps, en fonction des perturbations introduites par les barres de commande ou la modification du réfrigérant, nécessitaient l'utilisation de très gros ordinateurs et des temps de traitement très importants.

On introduisait comme données, pour l'exploitation de ce modèle mathématique, les relevés des mesures effectuées au niveau du coeur du réacteur, après un prétraitement réalisant une mise sous forme numérique de ces données.

Le temps nécessaire pour traiter les mesures effectuées au niveau du réacteur et introduire ces données, compte tenu du fait que les calculateurs susceptibles d'utiliser le modèle mathématique sont situés à un endroit éloigné du site du réacteur nucléaire, rend impossible l'utilisation du modèle mathématique pour effectuer des prédictions sur l'évolution des paramètres du réacteur en un temps suffisamment court, prédictions qui seraient utiles pour l'opérateur pour optimiser la conduite du réacteur nucléaire.

Les modèles mathématiques utilisés pour le calcul de l'évolution des paramètres traduisant l'état du coeur d'un réacteur nucléaire dérivent tous d'équations du même type qui sont les équations de diffusion neutronique dans l'ambience du réacteur. Le calcul des différents paramètres utiles pour la conduite d'un réacteur nucléaire procède donc toujours du même principe et les modèles mathématiques nécessaires pour effectuer ces calculs n'ont jamais pu être rendus compatibles avec une utilisation à proximité du réacteur nucléaire en des temps très courts pour aider l'opérateur chargé de la conduite du réacteur.

D'autre part, un traitement en temps réel pour la mise à jour du modèle mathématique pendant le fonctionnement du réacteur et la réalisation de prévisions n'étaient pas possibles à cause de la durée des traitements nécessaires compte tenu des moyens pour les mettre en oeuvre dans le calculateur par rapport à la durée des opérations dans le réacteur nucléaire.

Le but de l'invention est donc de proposer un procédé de conduite d'un réacteur nucléaire refroidi à l'eau légère par déplacement de barres de commande et modification de l'état chimique et/ou physique du réfrigérant, de façon à obtenir à chaque instant une disponibilité optimale de la puissance du coeur du réacteur, ce procédé devant permettre d'effectuer des prévisions sur l'évolution des paramètres de fonctionnement du réacteur utilisables immédiatement par l'operateur chargé de la conduite.

Dans ca but, on effectue la suite d'opérations suivantes:
— on mesure sous forme numérique et on enregistre de façon continue la valeur instantanée des paramètres représentant la position des barres de commande et l'état physique et chimique du réfrigérant, ou paramètres de conduite,
— on calcule, à chaque fois qu'une modification sensible des paramètres de conduite du réacteur est intervenue et à des intervalles de temps prédéterminés, pendant le fonctionnement du réacteur et à proximité de celui-ci, la valeur instantanée d'un certain nombre de paramètres relatifs au flux neutronique dans le coeur du réacteur, à la répartition de la puissance et à l'état du combustible, avec une précision suffisante pour la conduite du réacteur pendant un intervalle de temps défini, en fonction des paramètres de conduite.

— on mesure à des intervalles de temps définis, les valeurs de ces paramètres relatifs à l'état du coeur,

— on enregistre, en continu, les valeurs calculées et mesurées des paramètres relatifs à l'état du coeur,

— on remplace les valeurs calculées des paramètres par les valeurs mesurées,

— on calcule, de façon prévisionnelle, à partir des valeurs enregistrées et actualisées des paramètres, les paramètres modifiés résultant soit de séquences d'action prédéterminées envisageables sur les barres de commande ou l'état du réfrigérant, soit de programmes de puissance à fournir par le réacteur et par conséquent on détermine les actions nécessaires sur les paramètres de conduite pour suivre un programme de puissance donné ou obtenir, maintenir ou prévoir un état du coeur donné, en tenant compte des limites de sécurité du réacteur,

— en fonction des résultats du calcul, on agit sur les barres de commande et l'état du réfrigérant de façon automatique ou par opérateur interposé.

On va maintenant décrire, à titre d'exemples non limitatifs, plusieurs opérations intervenant dans la conduite d'un réacteur nucléaire, le procédé suivant l'invention permettant de déterminer les conditions à respecter pour effectuer ces opérations.

On dispose, pour la mise en oeuvre du procédé suivant l'invention, à proximité d'un réacteur nucléaire à eau sous pression, d'un calculateur ayant une mémoire centrale d'une capacité de 128.000 mots de 16 bits, d'une unité à disque magnétique et de diverses unités périphériques telles qu'une imprimante, une machine à écrire de service, une console de visualisation et un lecteur de cartes perforées.

Le réacteur comporte de façon habituelle une instrumentation disposée à l'intérieur du coeur permettant des relevés précis de l'état du coeur et fournissant les distributions d'activités et quelques facteurs neutroniques importants.

On dispose également d'une instrumentation à l'extérieur de la cuve du réacteur permettant des mesures de flux neutronique à différentes hauteurs du coeur ainsi que des prises de mesures physiques et chimiques réparties de façon à connaître les paramètres du réacteur (pression, débit, température, concentration de bore . . .).

Cette instrumentation est utilisée de façon à fournir des données numériques en permanence au calculateur qui reçoit ainsi les données réelles instantanées pour certains des paramètres pris en compte dans le calcul.

De façon classique, un certain nombre de données de base sont fournies au départ au calculateur par l'intermédiaire de cartes perforées ou de supports magnétiques. Ce sont les données géométriques et neutroniques du réacteur telles que les sections efficaces et tout autre paramètre nécessaire aux calculs neutroniques par le modèle mathématique utilisé.

En début d'opération, on introduit également dans le calculateur les données sur les distributions axiales de flux, de puissance . . . résultant des traitements précédents ou par exemple issues de l'instrumentation interne.

Les paramètres constituant les données saisies en temps réel dans le réacteur nucléaire et transmis au calculateur sont essentiellement relatifs à la position des barres de commande, aux températures d'entrée et de sortie du réfrigérant, au niveau de puissance demandée au réacteur, à la concentration en bore du réfrigérant et à la déviation axiale du flux.

En ce qui concerne la déviation axiale du flux $\Delta\phi$, ce paramètre représente le rapport

$$\frac{\phi H - \phi B}{\phi H + \phi B}$$

où $\phi H$ est le flux neutronique de la moitié supérieure du coeur et $\phi B$ le flux neutronique de la moitié inférieure du coeur.

Le temps est également pris en compte dans le calculateur qui enregistre la date et l'heure en regard des différentes autres informations qu'il reçoit.

A partir de ces différentes données, le calculateur fournit en permanence et en temps réel, les distributions axiales de puissance, de flux neutronique, d'épuisement du combustible, de concentration en xénon formé le long des éléments combustibles ainsi que la déviation axiale comme définie précédemment.

Certains des paramètres calculés sont également mesurés dans le réacteur nucléaire et étant donnée la schématisation du modèle qui a permis de le miniaturiser pour l'utiliser sur le site, certaines déviations entre les valeurs calculées et mesurées peuvent apparaître après une certaine période de fonctionnement du réacteur.

En conséquence, les valeurs calculées sont remplacées par les valeurs mesurées afin d'effectuer le recalage du modèle mathématique à des intervalles de temps définis.

On peut ainsi utiliser un modèle simplifié, tout en gardant une bonne précision au cours d'un fonctionnement de longue durée, en recalant le modèle périodiquement.

Par ailleurs, l'entrée dans le calculateur des paramètres relatifs aux barres de commande ou à l'état du réfrigérant, appelés paramètres de conduite, mesurés en permanence et sous forme numérique, permet une mise à jour continue des paramètres traduisant l'état du coeur du réacteur.

Le calcul de l'évolution des paramètres est suffisamment précis pour permettre la conduite du réacteur par l'opérateur.

Parmi les données permanentes introduites dans le calculateur se trouvent les valeurs limites de sécurité concernant la répartition de puissance ou de flux, le point de départ de l'ébullition critique et les possibilités de mise à l'arrêt du réacteur.

On voit qu'une des premières fonctions du calculateur et du procédé suivant l'invention est donc de calculer et d'enregistrer en permanence les paramètres représentatifs de l'état du coeur du réacteur.

A la demande, des éditions des valeurs de ces paramètres peuvent être obtenues et des sauvegardes de ces valeurs à différents moments sont réalisées.

Le réacteur nucléaire comporte comme moyens de commande, des groupes de barres déplaçables entre les éléments combustibles.

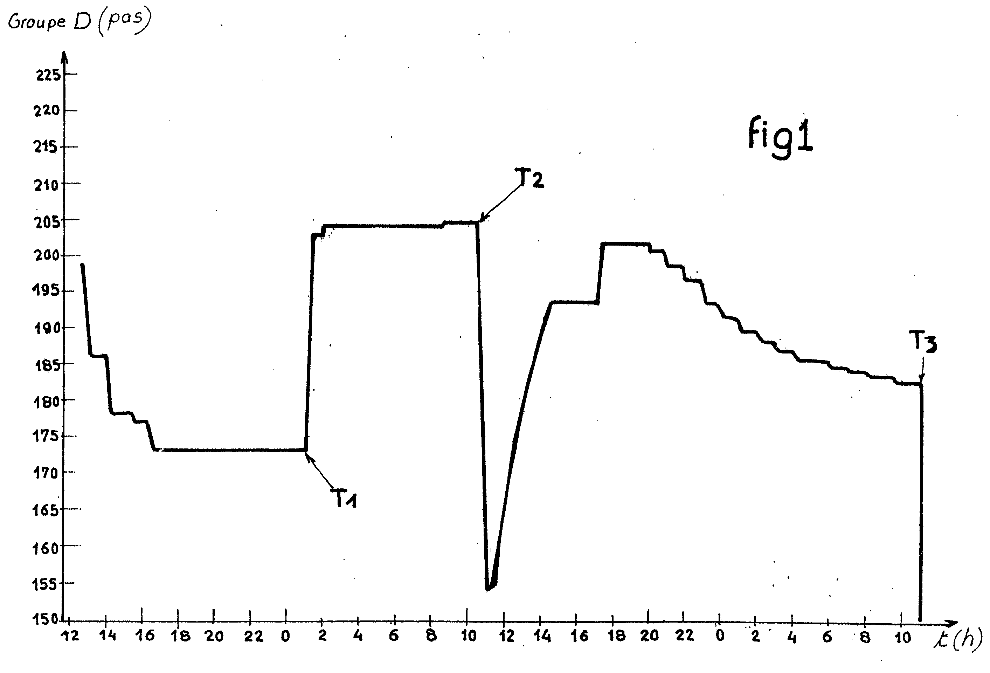

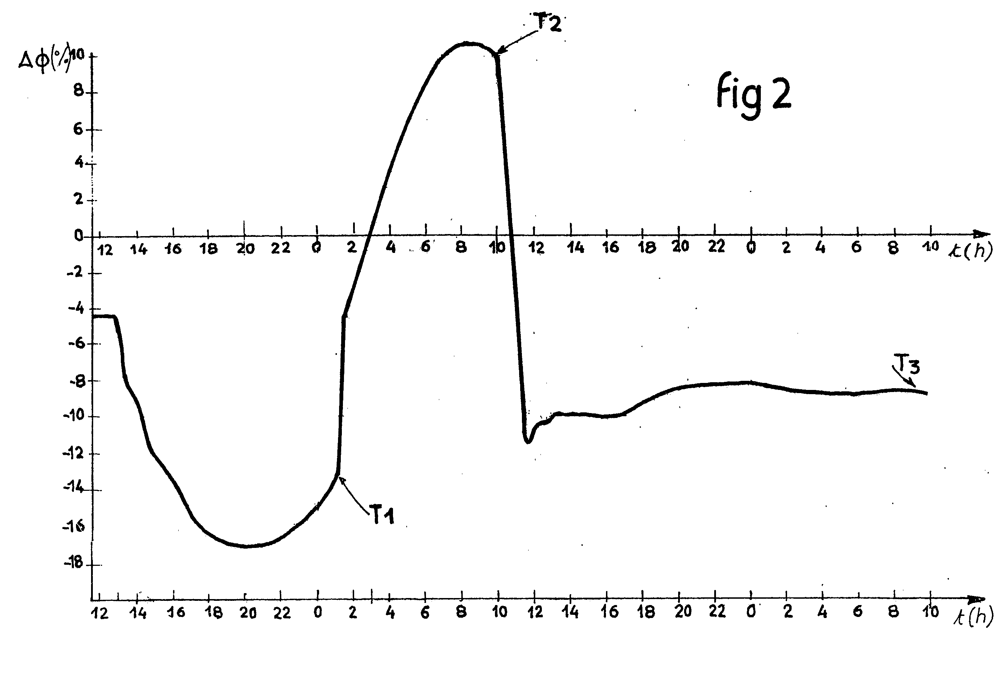

Dans un des modes de pilotage, appelé mode à déviation axiale constante, et qui est illustré par les figures 1 et 2, ces groupes de barres sont désignés par D, C, B et A.

On verra sur la figure 1, lors d'une opération menée sur le réacteur, les positions successives au cours du temps occupées par le groupe D mesurées en nombre de pas extraits, ce paramètre étant égal à zéro pour une barre complètement insérée et maximum pour une barre complètement extraite.

On verra sur la figure 2 l'évolution correspondante au cours du temps de la déviation axiale de flux $\Delta\phi$ consécutive aux différentes manoeuvres effectuées.

Les conditions de départ au cours des opérations effectuées lors d'un programme d'essais du réacteur sont les suivantes: insertion du groupe de barres D:199 pas, niveau de puissance relative: 73% de la puissance nominale.

Après une durée de fonctionnement de quelques heures au cours desquelles on a fait varier l'insertion du groupe D comme représenté à la figure 1 et où le $\Delta\phi$ a varié comme représenté à la figure 2, l'opérateur devait mettre à l'instant T1 le groupe D à 204 pas pour déclencher une oscillation xénon dans le cadre des essais à effectuer. La question qui se posait à lui était donc de savoir quelle concentration en bore dans le réfrigérant on doit respecter pour la conduite du réacteur, c'est-à-dire quelles sont les quantités d'acide borique ou d'eau à ajouter au réfrigérant pour assurer une conduite du réacteur, compte tenu de la nouvelle insertion du groupe D, en accord avec une marche optimale et en particulier en respectant les sécurités voulues.

L'opérateur dispose dans le procédé suivant l'invention d'un programme prédéterminé, en fonction des actions prévues, pour calculer à l'avance les effets de la nouvelle insertion du groupe D et les corrections à faire subir à la teneur en bore du réfrigérant.

En utilisant ce programme et les données d'entrée correspondant à l'insertion voulue du groupe D, l'opérateur obtient instantanément, sur l'écran de visualisation et sur l'imprimante, les consignes de conduite sous la forme de quantités d'acide borique à ajouter au réfrigérant.

Un autre programme peut lui permettre de connaître également l'évolution de l'empoisonnement xénon et de la déviation axiale du flux pendant les heures suivant la nouvelle insertion du groupe D et les additions d'acide borique suivant le programme demandé.

On voit que le procédé suivant l'invention permet de faire des prévisions sur l'evolution des paramètres du réacteur et de connaître les actions souhaitables en cas de modification de certaines données telles que l'insertion des barres de commande.

Après l'instant T1 correspondant à la nouvelle insertion du groupe de barres de commande D à 204 pas et la modification de la teneur en bore suivant ce qui résulte du calcul prévisionnel, le $\Delta\phi$ évolue comme présenté à la figure 2 jusqu'à l'instant T2 où l'on souhaite supprimer l'oscillation xénon par la réinsertion du groupe D.

Pour réaliser cette stabilisation, on souhaite mettre le groupe D à 165 pas et maintenir la déviation axiale dans une plage de $\pm$ 3% autour de sa valeur d'équilibre pour l'insertion du groupe D à 165 pas, en modifiant la teneur en bore du réfrigérant.

Pour ce faire, l'opérateur dispose d'un programme capable de calculer la valeur de la déviation axiale d'équilibre avec le groupe D à 165 pas et d'un programme capable de déterminer les quantités d'eau ou d'acide borique à ajouter au refrigérant pour maintenir cette déviation axiale dans une plage de $\pm$3% autour de la valeur calculée précédemment.

L'opérateur peut ainsi effectuer la conduite du réacteur en connaissant d'avance toutes les manoeuvres à effectuer pour amortir l'oscillation xénon.

Dans le cas de l'opération représentée à la figure 1, on a représenté une manipulation réelle effectuée par un opérateur qui ne connaissait pas à l'avance la valeur de la déviation axiale d'équilibre et les actions à mener sur la concentration en bore soluble du réfrigérant et l'on voit quede cette façon la stabilisation de la déviation axiale est réalisée à une valeur qui correspond en fait à l'équilibre avec le groupe D à 180 pas.

Pour une raison indépendante, on aboutit à l'instant T3 à un arrêt d'urgence et, à cette occasion, l'operateur a de nouveau la possibilité d'utiliser le calculateur pour déterminer les manoeuvres nécessaires pour le redémarrage. Il faut en effet déterminer après le redémarrage de l'installation les actions à effectuer sur la concentration en bore du réfrigérant pour pouvoir maintenir les groupes de régulation à la position de retour rapide en puissance.

Un programme dit "de redémarrage après arrêt" permet, en fournissant comme donnée d'entrée, soit la position de retour en puissance des grappes de barres de commande, soit le niveau de puissance, de connaître, pour une certaine durée suivant l'arrêt, les actions à effectuer sur la concentration en bore soluble du réfrigérant.

Le calculateur fournira alors, au moment voulu, les indications des manoeuvres à effectuer, à l'opérateur.

On voit qu'ainsi, non seulement le procédé suivant l'invention permet d'éviter les arrêts d'urgence en prévoyant la possibilité ou l'impossibilité des manoeuvres prévues par l'opérateur interrogeant le calculateur, mais encore d'effectuer de façon sûre des manoeuvres telles qu'un redémarrage aprés d'urgence.

Le nombre de tâches qu'on peut assigner au calculateur n'est pas limité dans le domaine des calculs prévisionnels car on peut imaginer des programmes de calculs correspondant à des situations extrêmement différentes et à des suites d'opérations diverses.

On peut ainsi calculer les variations de n'importe quel paramètre tel que le niveau de puissance, la position de barres de commande, la concentration en bore soluble, ou les températures d'entrée et de sortie du fluide réfrigérant, à la suite d'une modification quelconque d'un paramètre de conduite du réacteur. On peut effectuer ces calculs prévisionnels en imposant certaines conditions concernant par exemple la valeur de la réactivité ou de la déviation axiale.

On peut également prévoir des programmes plus complexes correspondant par exemple à la détermination des manoeuvres à effectuer dans le cadre d'un programme de suivi de charge, c'est à dire d'un programme de puissance à fournir par le réacteur, au cours du temps.

On peut suivre un programme de puissance quelconque, par exemple un programme comportant des variations de puissance extrêmement rapides comme dans le cas où la centrale nucléaire fonctionne en téléréglage.

Dans tous les cas les calculs prévisionnels ou les consignes concernant la conduite du réacteur déterminées par le calculateur prennent en compte les limites de sécurité du réacteur et l'on évite ainsi toute fausse manoeuvre.

On peut également utiliser le calculateur pour effectuer d'autres fonctions par exemple le dépouillement des mesures effectuées dans le coeur du réacteur lors de la réalisation d'essais ou après un incident ou encore pour déterminer l'état du combustible de façon extrêmement précise. On obtient ainsi une rapidité de dépouillement bien plus grande que dans le cas où le traitement était effectué loin du site du réacteur.

On voit donc que les avantages du procédé suivant l'invention sont de permettre un calcul en temps réel, pendant le fonctionnement du réacteur, de tous les paramètres utiles pour la conduite de ce réacteur, compte tenu des limites de sécurité et du programme de puissance à respecter.

Le fait d'avoir sur le site en permanence une représentation numérique de l'état du coeur du réacteur permet d'effectuer tout type de calculs prévisionnels ou de répondre à tout programme de puissance avec la possibilité pour l'opérateur de connaître à l'avance les résultats des actions qu'il peut avoir ou les actions à effectuer dans un but déterminé.

Un autre avantage du procédé suivant l'invention est de permettre un fonctionnement du réacteur avec un rejet d'effluent réduit puisque les actions sur le bore soluble dans le fluide réfrigérant sont faites de façon extrémement précises. On peut introduire comme condition supplémentaire dans le calcul un rejet d'effluent minimum ou des mouvements des barres de commande réduits à leur minimum, ou tout autre paramètre pris comme grandeur réglée.

Le procédé suivant l'invention ne se limite pas au mode de réalisation qui a été décrit, il en comporte au contraire toutes les variantes.

C'est ainsi que les calculs nécessaires à la connaissance instantanée de tous les paramètres peuvent être effectués par un calculateur d'un type quelconque, utilisant un modèle mathématique approprié dérivant des calculs de diffusion neutronique à partir du moment où les temps de traitement sont compatibles avec une utilisation du calculateur en temps réel et avec la possibilité de conversation entre l'opérateur et le calculateur pour obtenir, par des calculs prévisionnels, les effets de manoeuvres qu'il peut avoir à effectuer.

Les paramètres calculés utiles pour la conduite du réacteur peuvent comprendre en dehors des paramètres qui ont été mentionnés d'autres paramètres, le degré de précision des représentations numériques des phénomènes se déroulant dans le coeur n'étant limité que par la possibilité d'obtenir cette précision avec un calculateur utilisé sur le site et pour des temps de traitement compatibles avec l'utilisation en temps réel du procédé.

Dans l'exemple qui a été décrit, on appliquait le procédé de conduite suivant l'invention, dans le cas d'un pilotage à déviation axiale constante, utilisant des groupes de barres de commande toutes absorbantes, mais il est bien entendu que l'invention s'applique également dans le cas d'autres modes de pilotage, par exemple dans le cas d'un pilotage utilisant des groupes moins absorbants, appelés groupes gris et un groupe de régulation, tel qu'il est décrit dans la demande de brevet FR—A—2 395 572.

Dans l'exemple qui a été décrit, les actions étaient effectuées par un opérateur qui interrogeait le calculateur pour obtenir des calculs prévisionnels ou des consignes d'action à effectuer mais il est possible d'imaginer des moyens répondant automatiquement aux ordres fournis par le calculateur pour la conduite du réacteur nucléaire.

Dans le cas d'un opérateur cependant, le procédé suivant l'invention permet, à titre expérimental, l'étude en simulation de modes de conduite différents imaginés par l'opérateur avec une obtention rapide et automatique des résultats de ces nouveaux modes opératoires.

Enfin, le procédé suivant l'invention s'applique non seulement aux réacteurs à eau sous pression mais également aux autres types de réacteur utilisant de l'eau comme fluide de réfrigération.

**Revendications**

1. Procédé de conduite d'un réacteur nucléaire refroidi à l'eau légère, par déplacement de barres de commande et modification de l'état chimique et/ou physique du réfrigérant, de façon à obtenir à chaque instant une disponibilité optimale de la puissance du coeur du réacteur, caractérisé par le fait:
— qu'on mesure sous forme numérique et qu'on enregistre de façon continue la valeur instantanée des paramètres représentant la position des barres de commande et l'état physique et chimique du réfrigérant, ou paramètres de conduite,
— qu'on calcule, à chaque fois qu'une modification sensible des paramètres de conduite du réacteur est intervenue et à des intervalles de temps prédéterminés, pendant le fonctionnement du réacteur et à proximité de celui-ci, la valeur instantanée d'un certain nombre de paramètres relatifs au flux neutronique dans le coeur du réacteur, à la répartition de la puissance et à l'état du combustible, avec une précision suffisante pour la conduite du réacteur pendant un intervalle de temps défini, en fonction des paramètres de conduite,
— qu'on mesure à des intervalles de temps définis, les valeurs de ces paramètres relatifs à l'état du coeur, ·
— qu'on enregistre, en continu, les valeurs calculées et mesurées des paramètres relatifs à l'état du coeur,
— qu'on remplace les valeurs calculées des paramètres par les valeurs mesurées,
— qu'on calcule, de façon prévisionnelle, à partir des valeurs enregistrées et actualisées des paramètres, les paramètres modifiés résultant soit de séquences d'action prédéterminées envisageables sur les barres de commande ou l'état du réfrigérant, soit de programmes de puissance à fournir par le réacteur et par conséquent on détermine les actions nécessaires sur les paramètres de conduite pour suivre un programme de puissance donné ou obtenir, maintenir ou prévoir un état du coeur donné, en tenant compte des limites de sécurité du réacteur,
— qu'en fonction des résultats du calcul, on agit sur les barres de commande et l'état du réfrigérant de façon automatique ou par opérateur interposé.

2. Procédé de conduite d'un réacteur nucléaire suivant la revendication 1, dans le cas d'un réacteur à eau sous pression, caractérisé par le fait que la modification de l'état du réfrigérant est obtenue par la modification de la concentration de bore soluble dans ce réfrigérant par addition d'eau on d'acide borique.

3. Procédé de conduite d'un réacteur nucléaire suivant la revendication 2 caractérisé par le fait que le calcul et la prévision des actions sur le bore soluble prend en compte une condition relative à un rejet d'effluent minimum.

4. Procédé de conduite suivant la revendication 1, caractérisé par le fait que le calcul et la prévision des mouvements de barres de commande prend en compte une condition relative à des mouvements des barres de commande réduits au minimum.

5. Procédé suivant l'une quelconque des revendications 1, 2, 3, et 4, caractérisé par le fait que les paramètres calculés concernent la distribution suivant la direction axiale du réacteur de la puissance ou du flux neutronique, de l'épuisement du combustible, de la concentration du xénon formé ainsi que la déviation axiale du flux et la réactivité.

**Patentansprüche**

1. Verfahren zum Steuern eines leichtwassergekühlten Kernreaktors durch Verstellung der Steuerstäbe und Änderung des chemischen und/oder physikalischen Kühlmittelzustands, um stets eine optimale Verfügbarkeit der Reaktorkern-Leistung zu erzielen, dadurch gekennzeichnet:
— dass der augenblickliche Wert der die Stellung der Steuerstäbe sowie den physikalischen und chemischen Kühlmittelzustand darstellenden Parameter oder Steuerparameter in numerischer Form gemessen und ständig aufgezeichnet wird,
— dass jedes Mal, wenn eine merkliche Änderung der Reaktor-Steuerparameter eintritt, in vorbestimmten Zeitabständen, während des Betriebs des Reaktors und in dessen Nähe der augenblickliche Wert einer gewissen Anzahl von Parametern, die sich auf den Neutronenfluss im Reaktorkern, auf die Leistungsverteilung und auf den Brennstoffzustand beziehen, mit ausreichender Genauigkeit berechnet wird, damit der Reaktor während einer bestimmten Zeit in Abhängigkeit der Steuerparameter gesteuert werden kann,
— dass die Werte dieser Parameter bezüglich des Kernzustands in bestimmten Zeitabständen gemessen werden,
— dass die berechneten und gemessenen Werte der Parameter bezüglich des Kernzustands ständig aufgezeichnet werden,
— dass die errechneten Parameterwerte durch Messwerte ersetzt werden,

— dass ausgehend von den aufgezeichneten und aktualisierten Werten der Parameter die geänderten Parameter vorausberechnet werden, die sich entweder aus möglichen vorbestimmten Einwirkungsfolgen auf die Steuerstäbe oder auf den Kühlmittelzustand oder aus vom Reaktor zu liefernden Leistungsprogrammen ergeben und dass demnach die auf die Steuerparameter vorzunehmenden Einwirkungen bestimmt werden, die erforderlich sind, um ein gegebenes Leistungsprogramm durchzuführen oder um einen gegebenen Kernzustand zu erzielen, aufrechtzuerhalten oder vorauszusehen, wobei die Reaktor-Sicherheitsgrenzen zu berücksichtigen sind,
— dass je nach den Rechenergebnissen auf die Steuerstäbe und den Kühlmittelzustand automatisch oder durch zwischengeschalteten Bedienungsmann eingewirkt wird.

2. Verfahren zum Steuern eines Kernreaktors nach Anspruch 1, im Falle eines Druckwasserreaktors, dadurch gekennzeichnet, dass die Änderung des Kühlmittelzustands durch die Änderung der Konzentration des in diesem Kühlmittel löslichen Bors unter Hinzufügung von Wasser oder Borsäure erzielt wird.

3. Verfahren zum Steuern eines Kernreaktors nach Anspruch 2 dadurch gekennzeichnet, dass die Berechnung und Vorausberechnung der Einwirkungen auf das lösliche Bor eine Bedingung berücksichtigt, die eine minimale Stoffableitung vorschreibt.

4. Steuerverfahren nach Anspruch 1 dadurch gekennzeichnet, dass die Berechnung und Vorausberechnung der Steuerstabbewegungen eine Bedingung berücksichtigt, die auf ein Mindestmass beschränkte Steuerstabbewegungen vorschreibt.

5. Verfahren nach einem der Ansprüche 1, 2, 3 und 4, dadurch gekennzeichnet, dass die errechneten Parameter, die Verteilung in Reaktorachsenrichtung der Leistung oder des Neutronenflusses, des Brennstoffabbrands, der Konzentration des gebildeten Xenons sowie die Axialabweichung des Flusses und die Reaktivität betreffen.

**Claims**

1. Process for operating a light-water cooled nuclear reactor, by displacement of control rods and modification of the chemical and/or physical state of the refrigerant, in order to obtain at all times optimum availability of the power from the reactor core, characterised by the fact:
— that the instantaneous value of parameters representing the position of the control rods and the physical and chemical state of the refrigerant, or operating parameters, are measured in digital form and recorded in a continuous manner,
— that calculation is carried out, on each occasion when a noticeable modification in the operating parameters has occurred and at predetermined time intervals, during the operation of the reactor and in the proximity of the same, of the instantaneous value of a certain number of parameters relating to the neutron flux in the reactor core, relating to the distribution of the power and to the state of the fuel, with a sufficient degree of accuracy for operation of the reactor over a defined time interval, as a function of the operating parameters,
— that the values of these parameters relating to the state of the core are measured at defined time intervals,
— that the calculated and measured values of the parameters relating to the state of the core are recorded in a continuous manner,
— that the calculated values for the parameters are replaced by the measured values,
— that calculation is carried out in an anticipated manner, using the recorded values and actual values of the parameters, of the modified parameters resulting either from envisaged predetermined sequences of action carried out on the control rods or the state of the refrigerant, or resulting from programmes of the power which is to be supplied by the reactor and as a result of which determination is carried out of the action necessary on the operating parameters in order to follow a given power programme or to obtain, maintain or forecast a given state of the core, taking into account the safety limits for the reactor,
— that as a function of the results of the calculation, the control rods and the state of the refrigerant are acted on in an automatic manner or by steps taken by an operator.

2. Process for operating a nuclear reactor according to Claim 1, in the case of a pressurised water reactor, characterised by the fact that the modification in the state of the refrigerant is obtained by modifying the concentration of soluble boron in this refrigerant by carrying out addition of water or boric acid.

3. Process for operating a nuclear reactor according to Claim 2, characterised by the fact that the calculations and the forecasting of the action to be taken on the soluble boron takes into account a condition relating to minimum effluent discharge.

4. Operating process according to Claim 1, characterised by the fact that the calculation and the forecasting of the movements of the control rods takes into account a condition associated with movements of the control rods which are reduced to the minimum.

5. Process according to any one of Claims 1, 2, 3 and 4, characterised by the fact that the parameters which are calculated relate to the distribution, according to the axial direction of the reactor, of the power or neutron flux, of the exhaustion of the fuel, of the concentration of xenon formed as well as the axial deviation of the flux and the reactivity.

fig1

Fig 2